# EUROPÄISCHE PATENTSCHRIFT

(11) **EP 2 464 560 B1**
(45) Veröffentlichungstag und Bekanntmachung des Hinweises auf die Patenterteilung: **12.08.2015**
(21) Anmeldenummer: 10722714.2
(22) Anmeldetag: 11.06.2010
(51) Int. Cl.: B62M 6/45

(54) **ENERGIEMANAGEMENTSYSTEM FÜR EIN FAHRZEUG MIT KOMBINIERTEM ELEKTRO- UND MUSKELKRAFTANTRIEB UND VERFAHREN ZUM BETRIEB EINES DERARTIGEN FAHRZEUGES**
POWER MANAGEMENT SYSTEM FOR A VEHICLE HAVING COMBINED ELECTRIC AND MUSCLE POWER DRIVE AND METHOD FOR OPERATING SUCH A VEHICLE
SYSTÈME DE GESTION D'ÉNERGIE POUR UN VÉHICULE ASSOCIANT UNE PROPULSION ÉLECTRIQUE ET UNE PROPULSION PAR LA FORCE MUSCULAIRE ET PROCÉDÉ PERMETTANT DE FAIRE FONCTIONNER UN VÉHICULE DE CE TYPE

(30) Priorität: 10.08.2009 DE 102009028407
(43) Veröffentlichungstag der Anmeldung: 20.06.2012
(73) Patentinhaber: Robert Bosch GmbH, 70442 Stuttgart (DE)
(72) Erfinder: ZIMMERMANN, Marc, 71229 Leonberg (DE); STABREY, Stephan, 70174 Stuttgart (DE)
(86) Internationale Anmeldenummer: PCT/EP2010/058205
(87) Internationale Veröffentlichungsnummer: WO 2011/018255

(56) Entgegenhaltungen:
- EP-A1- 1 295 785
- WO-A1-2010/052395

## Beschreibung

Die Erfindung beschreibt ein Energiemanagementsystem für ein Fahrzeug mit kombiniertem Elektro- und Muskelkraftantrieb sowie ein Verfahren zum Betrieb eines derartigen Fahrzeuges.

### Stand der Technik

Fahrzeuge, insbesondere Fahrräder, mit kombiniertem Muskelkraft- und Elektroantrieb sind seit vielen Jahren bekannt. Man unterscheidet dabei zwei Grundprinzipien. Bei einem ersten Antriebsprinzip gibt ein Elektromotor seine Leistung nur dann ab, wenn auch Muskelkraft aufgebracht wird und dient somit als reiner Hilfsmotor. Fahrräder mit einem derartigen Antriebssystem werden häufig auch als "Pedelecs" bezeichnet. Die elektrische Unterstützung erfolgt dabei z. B. proportional, so dass beispielsweise der Motor die gleiche Antriebsleistung beisteuert, wie der Fahrer. Ein zweites Antriebsprinzip sieht vor, dass ein Elektromotor unabhängig von einer aufgebrachten Muskelkraft Energie abgibt und somit auch einen rein elektrischen Antrieb des Fahrzeugs ermöglicht. Fahrräder mit einem derartigen Antriebssystem werden häufig als Elektrorad oder E-Bike bezeichnet. Der Fahrer kann dabei die Antriebsleistung des Motors z. B. über einen "Gasgriff" vorgeben. Die Kombination von Muskelkraftantrieb und Elektroantrieb ist aber nicht auf Fahrräder beschränkt, sondern erstreckt sich unter anderem auch auf sogenannte Leichtelektromobile, wie sie beispielsweise unter der Marke "Twike" vertrieben werden.

Aus der Druckschrift DE 10 2006 062 584 A1 ist eine Antriebseinheit für ein Fahrzeug mit einer Energiequelle, einem Elektromotor und einem Speicher für elektrische Energie bekannt, bei der die Antriebseinheit während der Fahrt elektrische Energie in den Speicher in Abhängigkeit von der vom Fahrzeug noch zu befahrenden Strecke speichert. Ziel ist es dabei, die Energieflüsse im System in Abhängigkeit der noch zu befahrenden Strecke zu optimieren. Die noch zu befahrende Strecke wird dabei über eine Kamera aufgenommen oder über ein satellitengestütztes Navigationssystem berechnet. Falls es sich bei dem Fahrzeug um ein Fahrrad mit Hilfsmotor handelt, ist es aus der Druckschrift auch bekannt, dem Fahrer gegebenenfalls über eine Anzeigevorrichtung vorzuschlagen, die Pedale zu betätigen.

Aus der Druckschrift EP 0 846 614 A1 ist ein muskelkraftbetriebenes Fortbewegungsmittel mit Hilfsantrieb bekannt, welches eine Anzeigeeinheit aufweist, in welcher die aufgrund des Ladezustands einer Batterie noch verbleibende Restreichweite ohne Berücksichtigung der Muskelkraft angezeigt wird.

Die Druckschrift EP 1 295 785 A1 offenbart ein elektrisch und mit Muskelkraft betriebenes Fahrzeug, welches einen Motor und einen Energiespeicher verfügt, wobei in Abhängigkeit von Leistungsparametern des Nutzers, einer Fahrtroute und dem Ladezustand des Energiespeichers dem Nutzer angezeigt werden kann, wie viel Unterstützung der Motor dem Nutzer über die Fahrtroute hinweg liefern kann.

### Offenbarung der Erfindung

Die vorliegende Erfindung stellt ein Fahrzeug mit kombiniertem Elektro- und Muskelkraftantrieb, mit einem Elektromotor zum Antrieb des Fahrzeuges, einem Energiespeicher zur Versorgung des Elektromotors mit elektrischer Energie, und einem Energiemanagementsystem bereit. Das Energiemanagementsystem weist dabei eine Eingabeeinheit zum Eingeben mindestens einer, die geplante Fahrstrecke repräsentierenden Größe, ein Steuergerät zum Ermitteln einer Leistungsanforderung, welche die zum Befahren der geplanten Fahrstrecke von einem Fahrer des Fahrzeuges durch Muskelkraft zu erbringende Sollleistung darstellt, in Abhängigkeit von einem Ladezustand des Energiespeichers und von einem zum Befahren der geplanten Fahrstrecke ermittelten Gesamtenergiebedarf, eine Ausgabeeinheit zum Ausgeben der ermittelten Leistungsanforderung an den Fahrer, und ein Navigationssystem auf, welches mit der Eingabeeinheit und dem Steuergerät gekoppelt ist und auf Basis eines in die Eingabeeinheit eingegebenen gewünschten Zielortes zumindest die Länge der geplanten Fahrstrecke ermittelt. Die Eingabeeinheit ist dazu ausgelegt, dass eine durch Muskelkraft erbringbare Maximalleistung des Fahrers eingegeben wird, und das Navigationssystem ist dazu ausgelegt, in Abhängigkeit von dem gewünschten Zielort und der eingegebenen Maximalleistung eine Fahrtroute zu ermiteln. .Die Leistungsanforderung stellt dabei die zum Befahren der geplanten Fahrstrecke von einem Fahrer des Fahrzeuges durch Muskelkraft zu erbringende Sollleistung dar.

Durch die Ermittlung und die Ausgabe der zur Bewältigung der geplanten Fahrstrecke durch den Fahrer durch Muskelkraft zu erbringenden Leistung wird der Fahrer des Fahrzeugs bereits vor Beginn der Fahrt in die Lage versetzt, selbständig zu beurteilen, ob die eigene Leistungsfähigkeit ausreicht, um das gewünschte Fahrziel zu erreichen. Sollte der Fahrer zu dem Schluss kommen, dass seine Leistungsfähigkeit nicht ausreicht, kann er zum Beispiel zunächst eine Ladestation anfahren, um den Energiespeicher, z. B. eine Batterie aufzuladen.

Dabei wird vorteilhaft die über die gesamte Fahrstrecke durchschnittlich durch Muskelkraft zu erbringende Sollleistung ermittelt und ausgegeben, so dass der Fahrer einfach beurteilen kann, ob er im Stande ist, diese Sollleistung per Muskelkraft zu erbringen.

Gemäß einer Ausführungsform der Erfindung ist das Fahrzeug mit einem Hybridantrieb aus einem Elektromotor mit Muskelkraftunterstützung ausgestattet. Insbesondere ist ein elektrischer Serienhybridantrieb vorgesehen, bei dem das Fahrzeug über einen Elektromotor angetrieben wird, und der Fahrer seinen Beitrag zur Antriebsleistung über einen Generator leistet, der mit Muskelkraft antreibbar ist und den Elektromotor mit zusätzlicher Energie versorgt und/oder den Energiespeicher lädt. Die Energieströme werden dabei durch das Steuergerät bedarfsgerecht gesteuert.

Die Erfindung ist jedoch nicht auf Fahrzeuge mit derartigen Antriebssysteme beschränkt, sondern unabhängig von dem konkreten Antriebssystem auf alle Fahrzeuge anwendbar, bei denen der Fahrer einen Teil der erforderlichen Antriebsleistung per Muskelkraft beisteuern kann.

Durch die Kopplung des Energiemanagementsystems mit einem Navigationssystem ist es möglich, die Leistungsanforderung an den Fahrer lediglich auf Basis der Eingabe des gewünschten Zielortes zu ermitteln. Der Fahrer benötigt somit im Vorfeld keinerlei Informationen über die Länge der von ihm geplanten Fahrstrecke. Außerdem verfügen Navigationssysteme in der Regel über weitere, den Energiebedarf des Fahrzeugs beeinflussende Daten der zu befahrenden Strecke. So können dem Steuergerät zum Beispiel Daten hinsichtlich des Höhenprofils der zu befahrenden Strecke und/oder erlaubter oder zu erwartender Fahrgeschwindigkeiten zur Verfügung gestellt werden und bei der Ermittlung der Leistungsanforderung berücksichtigt werden.

Bei einem erfindungsgemäßen Verfahren zum Betrieb eines Fahrzeuges mit kombiniertem Elektro- und Muskelkraftantrieb mit einem Elektromotor zum Antrieb des Fahrzeuges und einem Energiespeicher zur Versorgung des Elektromotors mit elektrischer Energie wird eine, die geplante Fahrstrecke repräsentierende Größe über eine Eingabeeinheit eingegeben, eine Leistungsanforderung in Abhängigkeit von einem Ladezustand des Energiespeichers und von der Länge der geplanten Fahrstrecke durch ein Steuergerät ermittelt und die ermittelte Leistungsanforderung über eine Ausgabeeinheit an den Fahrer ausgegeben. Die Leistungsanforderung stellt dabei die zum Befahren der geplanten Fahrstrecke von einem Fahrer des Fahrzeuges durch Muskelkraft zu erbringende Sollleistung dar. Dabei wird die Länge der geplanten Fahrstrecke oder der gewünschte Zielort als die die geplante Fahrstrecke repräsentierende Größe eingegeben, und die Länge der geplanten Fahrstrecke wird mit Hilfe von Navigationsdaten aus dem eingegebenen gewünschten Zielort ermittelt. Über die Eingabeeinheit wird eine durch Muskelkraft erbringbare Maximalleistung des Fahrers eingegeben wird und mit Hilfe eines Navigationssystems in Abhängigkeit von dem gewünschten Zielort und der eingegebenen Maximalleistung eine Fahrtroute ermittelt.

Gemäß einer vorteilhaften Ausführungsform der Erfindung wird auf Basis des gewünschten Zielortes und/oder der Länge der geplanten Fahrstrecke sowie einer aktuellen Position und/oder einer bereits absolvierten Teilstrecke eine noch zu befahrende Reststrecke berechnet und für diese Reststrecke eine aktualisierte Leistungsanforderung ermittelt. Die Ermittlung einer aktualisierten Leistungsanforderung kann dabei permanent oder regelmäßig, das heißt in regelmäßigen Zeitabständen oder nach jeweils vorgegebenen Streckenabschnitten, also zum Beispiel nach jeweils einem gefahrenen Kilometer, erfolgen.

Gemäß einer Ausführungsform der Erfindung werden die Leistungsanforderung und/oder die aktualisierten Leistungsanforderungen in Abhängigkeit von durchschnittlichen Energieverbrauchsdaten ermittelt, welche zum Beispiel im Steuergerät gespeichert sind. Auch Messdaten der aktuellen Fahrt können für die Berechnung der Leistungsanforderung für die Reststrecke berücksichtigt werden. Vorteilhaft können aber bei der Ermittlung der Leistungsanforderung und/oder der aktualisierten Leistungsanforderung auch weitere den Energieverbrauch beeinflussende Daten, wie ein Höhenprofil der geplanten Fahrstrecke und/oder zu erwartende Fahrgeschwindigkeiten, berücksichtigt werden. Derartige Daten können beispielsweise durch ein Navigationssystem zur Verfügung gestellt werden.

Eine weitere Ausführungsform der Erfindung sieht vor, dass mit Hilfe der Muskelkraft ein Generator angetrieben wird, durch welchen der Elektromotor mit Energie versorgt werden kann und/oder der Energiespeicher geladen werden kann, wobei Leistungsparameter des Generators in Abhängigkeit von der ermittelten Leistungsanforderung oder aktualisierten Leistungsanforderung eingestellt werden.

Auf diese Weise kann beispielsweise erreicht werden, dass eine geplante Fahrstrecke stets mit dem geringst möglichen Kraftaufwand für den Fahrer bewältigt wird.

Gemäß einer weiteren Ausführungsform der Erfindung ist es für den Fahrer möglich, über die Eingabeeinheit eine Wunschleistung, insbesondere eine durchschnittliche Wunschleistung über die gesamte Fahrstrecke, einzugeben. Die Leistungsparameter des Generators werden dann entsprechend der eingegebenen Wunschleistung eingestellt. Sollte die eingestellte Wunschleistung der ermittelten Leistungsanforderung oder aktualisierten Leistungsanforderung nicht oder nicht mehr genügen, so kann ein Warnhinweis für den Fahrer ausgegeben werden und/oder die Leistungsparameter des Generators an die aktuelle Leistungsanforderung angepasst werden.

Bei der durch Muskelkraft erbringbaren Maximalleistung des Fahrers handelt es sich um die durch den Fahrer maximal durch Muskelkraft erbringbare Leistung. Vorteilhaft wird auch dabei die durch den Fahrer durch Muskelkraft maximal erbringbare durchschnittliche Leistung über die gesamte Fahrstrecke eingegeben. Ist das Fahrzeug mit einem Navigationssystem ausgestattet, so kann in Abhängigkeit von dem gewünschten Zielort und der eingegebenen Maximalleistung eine geeignete Fahrtroute ermittelt werden. Durch die Wahl einer geeigneten Fahrtroute kann sichergestellt werden, dass ein Fahrer einen gewünschten Zielort unter Berücksichtigung seiner Leistungsfähigkeit sicher erreicht.

Gemäß einer weiteren Ausführungsform der Erfindung können über die Ausgabeeinheit auch Fahrerinformationen ausgegeben werden, insbesondere für den Fall, dass die aktuell durch Muskelkraft erbrachte Istleistung der Leistungsanforderung oder der aktualisierten Leistungsanforderung nicht genügt. Die Fahrerinformationen können dabei beispielsweise als Hinweis ausgestaltet sein, dass eine höhere Leistung zu erbringen ist und/oder dass die Fahrgeschwindigkeit reduziert werden sollte, um den Energieverbrauch zu senken. Die Fahrerinformationen sind aber selbstverständlich nicht darauf beschränkt, sondern können jegliche die Energieerzeugung und den Energieverbrauch des Fahrzeuges betreffende Informationen umfassen. So kann beispielsweise auch die aufgrund des aktuellen Ladezustandes des Energiespeichers sowie der aktuellen Fahrerleistung erzielbare Reichweite des Fahrzeuges ausgegeben werden.

Durch einen permanenten oder regelmäßigen Vergleich der aktuell durch Muskelkraft erbrachten Istleistung mit der Leistungsanforderung oder der aktualisierten Leistungsanforderung und durch Ausgabe eines entsprechenden Hinweises, für den Fall, dass die erbrachte Istleistung der aktuellen Leistungsanforderung nicht genügt, kann der Fahrer frühzeitig über notwendige Anpassungen in seiner Fahrweise informiert werden, so dass das gewünschte Fahrziel dennoch sicher erreicht wird. Verfügt das Fahrzeug über ein Navigationssystem, kann auch eine alternative Route mit geringerem Leistungsbedarf ermittelt werden, wenn die Istleistung des Fahrers unter der aktualisierten Leistungsanforderung liegt.

Weitere Merkmale und Vorteile von Ausführungsformen der Erfindung ergeben sich aus der nachfolgenden Beschreibung mit Bezug auf die beigefügten Figuren.

### Kurze Beschreibung der Figuren

Es zeigen:
- Fig. 1: eine schematische Darstellung eines Fahrzeuges mit kombiniertem Elektro- und Muskelkraftantrieb und
- Fig. 2: ein schematisches Blockschaltbild eines erfindungsgemäßen Energiemanagementsystems.

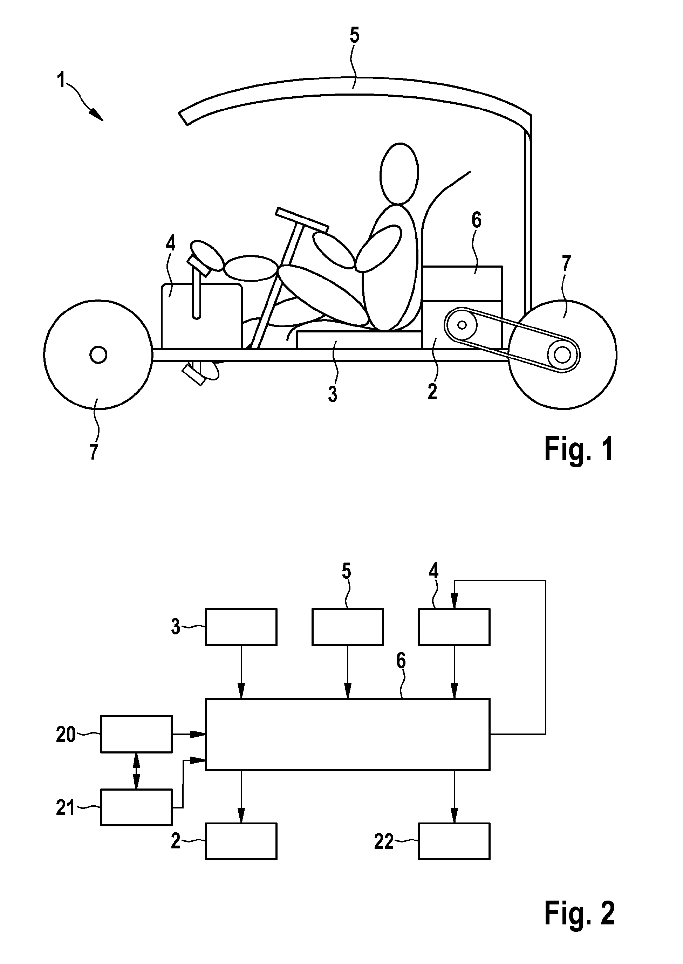

Fig. 1 zeigt ein als Leichtelektromobil ausgestaltetes Fahrzeug 1, welches über einen Elektromotor 2 angetrieben wird. Der Elektromotor 2 ist dazu mit mindestens einem der Räder 7 des Fahrzeugs 1 gekoppelt. Der Elektromotor 2 wird primär durch mindestens einen Energiespeicher 3, zum Beispiel in Form einer Batterie, mit Energie versorgt, kann aber alternativ oder zusätzlich auch mit Hilfe eines Generators 4 und/oder von Solarzellen 5 mit Energie versorgt werden. Der Energiespeicher 3, der Generator 4 und die Solarzellen 5 sind zu diesem Zweck über ein Steuergerät 6 in geeigneter Weise mit dem Elektromotor 2 gekoppelt. Der Generator 4 und/oder die Solarzellen 5 und ggf. auch weitere Energiequellen können, insbesondere im Stillstand des Fahrzeuges, auch dazu genutzt werden, den Energiespeicher 3 zu laden.

Der Generator 4 ist über Muskelkraft antreibbar. Im dargestellten Ausführungsbeispiel ist der Generator 4 als Pedalgenerator ausgeführt, welcher über Pedale durch Tretbewegungen des Fahrers antreibbar ist. Es sind aber auch Ausführungsformen des Generators 4 denkbar, bei denen dieser nicht mit Hilfe von Beinkraft, sondern z. B. mit Hilfe von Armkraft des Fahrers antreibbar ist.

Die in Fig. 1 dargestellten Solarzellen 5 stellen lediglich beispielhaft eine zusätzliche Energiequelle dar, mit der das Fahrzeug 1 neben dem Energiespeicher 3 und dem Generator 4 ausgestattet sein kann. Neben Solarzellen sind für eine derartige zusätzliche Energiequelle auch andere Energiequellen, wie z. B. Brennstoffzellen oder Range Extender (von einem Verbrennungsmotor angetriebener Generator) denkbar. Zur Realisierung eines erfindungsgemäßen Energiemanagementsystems ist eine derartige zusätzliche Energiequelle jedoch nicht erforderlich.

Das eigentliche Energiemanagement innerhalb des Fahrzeugs 1 wird von dem Steuergerät 6 übernommen, welches zu diesem Zweck mit allen Energiequellen, im gezeigten Ausführungsbeispiel also mit dem Energiespeicher 3, dem Generator 4 und den Solarzellen 5, sowie dem Elektromotor 2 gekoppelt ist. Das Steuergerät 6 ist außerdem mit einer nicht dargestellten Eingabeeinheit sowie einer ebenfalls nicht dargestellten Ausgabeeinheit gekoppelt.

Die in Fig. 1 dargestellte räumliche Anordnung der einzelnen Einheiten ist lediglich beispielhaft zu sehen und kann in beliebiger Art und Weise an die konkreten Rahmenbedingungen und Anforderungen innerhalb eines Fahrzeugs angepasst werden.

Ein erfindungsgemäßes Energiemanagementsystem ist in schematischer Darstellung in Fig. 2 dargestellt. Über eine Eingabeeinheit 20 wird eine, die geplante Fahrstrecke repräsentierende Größe, im einfachsten Fall die Länge der geplanten Fahrstrecke oder auch die Länge der geplanten Fahrstrecke in Verbindung mit einer Wunschgeschwindigkeit, eingegeben und an das Steuergerät 6 übermittelt. Die Eingabe kann dabei beispielsweise mit Hilfe von Bedienelementen, wie Tasten oder Knöpfen, oder auch mit Hilfe eines Touch Screens oder durch Spracheingabe erfolgen.

Ist das Fahrzeug 1 mit einem z. B. satellitengestützten Navigationssystem 21 ausgestattet, welches mit der Eingabeeinheit 20 und dem Steuergerät 6 gekoppelt ist, kann dieses auf Basis eines in die Eingabeeinheit 20 eingegebenen gewünschten Zielortes aufgrund der aktuellen Position des Fahrzeuges 1 die Länge der geplanten Fahrstrecke ermitteln. Weitere im Navigationssystem verfügbare und den Energieverbrauch des Fahrzeuges 1 beeinflussende Daten bezüglich der zu befahrenden Strecke, wie zum Beispiel Daten bezüglich eines Höhenprofils der zu befahrenden Strecke und/oder der zu erwartenden Fahrgeschwindigkeiten, können dem Steuergerät 6 ebenfalls zur Verfügung gestellt werden. Gemäß einer vorteilhaften Ausführungsform der Erfindung wird, für den Fall, dass das Fahrzeug 1 ein Navigationssystem 21 aufweist, eine Eingabeeinheit des Navigationssystems 21 zugleich als Eingabeeinheit 20 des Energiemanagementsystems genutzt.

Der Energiespeicher 3 ist mit einem nicht dargestellten Batteriemanagementsystem ausgestattet, welches den Zustand des Energiespeichers überwacht und den jeweils aktuellen Ladezustand des Energiespeichers 3 an das Steuergerät 6 übermittelt.

In Abhängigkeit von der Länge der geplanten Fahrstrecke und ggf. der Wunschgeschwindigkeit sowie weiterer zur Verfügung stehender, den Energiebedarf beeinflussender Fahrzeug- oder Streckendaten wird durch das Steuergerät 6 oder ggf. auch durch das Navigationssystem 21 ein Gesamtenergiebedarf ermittelt. In Abhängigkeit von dem Ladezustand des Energiespeichers 3 und von dem ermittelten Gesamtenergiebedarf ermittelt das Steuergerät 6 eine Leistungsanforderung, welche die zum Befahren der geplanten Fahrstrecke von einem Fahrer des Fahrzeuges 1 durch Muskelkraft zu erbringende Sollleistung darstellt. Das Steuergerät 6 ermittelt hierzu zunächst den sich aus der Länge der geplanten Fahrstrecke ergebenden Gesamtenergiebedarf, vergleicht diesen mit der in dem Energiespeicher noch verfügbaren Energie und berechnet auf Basis der fehlenden Energiemenge schließlich die durch den Fahrer zusätzlich zu erbringende Sollleistung. Diese zusätzlich benötigte Leistung wird anschließend als Leistungsanforderung über eine Ausgabeeinheit 22, vorzugsweise als durchschnittlich per Muskelkraft durch den Fahrer zu erbringende Sollleistung, ausgegeben. Die Ausgabeeinheit 22 kann dabei zum Beispiel in Form eines Displays ausgestaltet sein. Der Fahrer ist dadurch in der Lage selbst zu entscheiden, ob er diese Sollleistung aufbringen kann und will.

Zur Bestimmung des Gesamtenergiebedarfs für die zu befahrende Strecke werden im einfachsten Fall durchschnittliche Energieverbrauchsdaten verwendet, welche im Fahrzeug, vorzugsweise im Steuergerät 6, gespeichert sind. Diese Verbrauchsdaten können auch während der Fahrt aufgrund aktueller Messdaten aktualisiert werden, um z. B. den Energieverbrauch beeinflussenden Faktoren wie Beladung des Fahrzeugs oder Reifendruck zu berücksichtigen. Stehen dem Steuergerät 6 aber neben der Länge der geplanten Fahrstrecke und ggf. der Wunschgeschwindigkeit weitere die Fahrstrecke charakterisierende und den Energieverbrauch beeinflussende Kenngrößen der geplanten Fahrstrecke zur Verfügung, ist es vorteilhaft, diese in die Ermittlung des Gesamtenergiebedarfs einzubeziehen. So können beispielsweise ein Höhenprofil der zu befahrenden Strecke und/oder zu erwartende Fahrgeschwindigkeiten, berücksichtigt werden.

Das Höhenprofil kann dabei zum Beispiel dahingehend ausgewertet werden, dass ansteigende Streckenabschnitte durch einen in Abhängigkeit der Steigung erhöhten Energiebedarf und abfallende Streckenabschnitte in Abhängigkeit des Gefälles durch verringerten oder auch keinen Energiebedarf charakterisiert werden. Verfügt das Fahrzeug auch über einen rekuperativen Betriebsmodus, in welchem bei Abfahrten oder beim Bremsen des Fahrzeuges 1 Energie rückgewonnen wird, welche in dem Energiespeicher 3 gespeichert wird, so kann das Höhenprofil der zu befahrenden Strecke auch dahingehend berücksichtigt werden, dass eine zu erwartende Energierückgewinnung in die Ermittlung der Leistungsanforderung einbezogen wird.

Gemäß einer vorteilhaften Ausführungsform der Erfindung werden die Leistungsparameter des Generators 4 in Abhängigkeit von der ermittelten Leistungsanforderung eingestellt.

Das Steuergerät 6 ist mit allen in dem Fahrzeug 1 verfügbaren Energiequellen und Energiespeichern für den Elektromotor 2, im vorliegenden Beispiel also mit dem Energiespeicher 3, dem Generator 4 und den Solarzellen 5, verbunden und kann vorzugsweise die Energiezufuhr zu dem Elektromotor 2 und gegebenenfalls auch die Ladung des Energiespeichers 3 im Rekuperationsbetrieb beliebig steuern.

Gemäß einer vorteilhaften Ausführungsform der Erfindung wird auf Basis des gewünschten Zielortes und/oder der Länge der geplanten Fahrstrecke sowie einer aktuellen Position und/oder einer bereits absolvierten Teilstrecke eine noch zu absolvierende Reststrecke berechnet und für diese Reststrecke permanent oder regelmäßig eine aktualisierte Leistungsanforderung ermittelt. Auf diese Weise kann auch während der Fahrt sichergestellt werden, dass die aktuell erbrachte Istleistung des Fahrers der aktuellen Leistungsanforderung genügt. Ist das nicht der Fall, können über die Ausgabeeinheit 22 Fahrerinformationen ausgegeben werden, die den Fahrer darauf hinweisen, dass eine höhere Leistung zu erbringen ist und/oder dass beispielsweise die Fahrgeschwindigkeit reduziert werden sollte, um den Energiebedarf zu verringern. Ist das Fahrzeug mit einem Navigationssystem 21 ausgerüstet, so kann auch eine alternative Route mit geringerem Leistungsbedarf ermittelt werden, wenn die Istleistung des Fahrers unter der aktualisierten Leistungsanforderung liegt.

Vorteilhaft können die Leistungsparameter des Generators 4 adaptiv an die jeweils aktualisierte Leistungsanforderung angepasst werden. Liegt die aktualisierte Leistungsanforderung unterhalb der ursprünglichen oder vorhergehenden Leistungsanforderung, so dass die aktuell aufgebrachte Istleistung des Fahrers höher ist als die erforderliche Sollleistung, so kann die durch den Fahrer zu erbringende Leistung durch entsprechende Anpassung der Leistungsparameter des Generators 4 verringert werden. Dieser Fall kann beispielsweise dann eintreten, wenn aufgrund von Rückenwind weniger Energie benötigt wird als zum Zeitpunkt der Bestimmung der Leistungsanforderung angenommen. Ebenso kann eine hohe Energierückgewinnung durch Rekuperation oder auch die Energiezufuhr durch zusätzliche Energiequellen, wie der Solarzellen 5, zu einem verminderten Energiebedarf führen.

Gemäß einer Ausführungsform der Erfindung kann der Fahrer über die Eingabeeinheit 20 auch eine Wunschleistung eingeben, so dass die Leistung des Generators 4 durch das Steuergerät 6 entsprechend dieser Wunschleistung eingestellt werden kann. Dabei muss die eingegebene Wunschleistung größer oder gleich der ermittelten durchschnittlich per Muskelkraft zu erbringenden Sollleistung sein. Deckt der Energiegehalt des Energiespeichers 3 den Energiebedarf der Fahrt, kann auch eine Generatorleistung von 0 Watt gewählt werden. Der Fahrer kann in diesem Fall aber auch eine beliebige, ihm angenehme Generatorleistung einstellen. Liegt die eingestellte Wunschleistung unterhalb der aktuellen Leistungsanforderung, so kann der Fahrer über die Ausgabeeinheit 22 darüber informiert werden und/oder die Generatorleistung an den erhöhten Energiebedarf angepasst werden.

Ist der Fahrer nicht bereit oder nicht im Stande, die vor Fahrtbeginn ausgegebene zu erbringende Sollleistung aufzuwenden und weist das Fahrzeug ein Navigationssystem 21 auf, so ist es weiterhin denkbar, vor Fahrtbeginn über die Eingabeeinheit 20 eine durch Muskelkraft erbringbare Maximalleistung des Fahrers einzugeben, wobei der Wert der Maximalleistung kleiner als die ermittelte durch Muskelkraft zu erbringende Sollleistung ist, und in Abhängigkeit von dem gewünschten Zielort und der eingegebenen Maximalleistung eine Fahrroute zu ermitteln, die das Erreichen des gewünschten Zielortes ohne Überschreiten der eingegebenen Maximalleistung ermöglicht. Ein geringerer Energiebedarf wird dabei z. B. durch Vermeidung von Steigungen oder gezielter Wahl von Strecken mit geringer Geschwindigkeit erreicht.

Gemäß einer vorteilhaften Ausführungsform der Erfindung wird, für den Fall, dass das Fahrzeug 1 ein Navigationssystem 21 aufweist, eine Ausgabeeinheit des Navigationssystems 21 zugleich als Ausgabeeinheit 22 des Energiemanagementsystems genutzt.

## Patentansprüche

1. Fahrzeug (1), mit kombiniertem Elektro- und Muskelkraftantrieb, mit:
einem Elektromotor (2) zum Antrieb des Fahrzeuges (1);
einem Energiespeicher (3) zur Versorgung des Elektromotors (2) mit elektrischer Energie; und
einem Energiemanagementsystem, welches aufweist:
eine Eingabeeinheit (20) zum Eingeben mindestens einer, die geplante Fahrstrecke repräsentierenden Größe,
ein Steuergerät (6) zum Ermitteln einer Leistungsanforderung, welche die zum Befahren der geplanten Fahrstrecke von einem Fahrer des Fahrzeuges (1) durch Muskelkraft zu erbringende Sollleistung darstellt, in Abhängigkeit von einem Ladezustand des Energiespeichers (3) und von einem zum Befahren der geplanten Fahrstrecke ermittelten Gesamtenergiebedarf,
eine Ausgabeeinheit (22) zum Ausgeben der ermittelten Leistungsanforderung an den Fahrer, und
ein Navigationssystem (21) aufweist, welches mit der Eingabeeinheit (20) und dem Steuergerät (6) gekoppelt ist und auf Basis eines in die Eingabeeinheit (20) eingegebenen gewünschten Zielortes zumindest die Länge
der geplanten Fahrstrecke ermittelt,
**dadurch gekennzeichnet, dass**
die Eingabeeinheit (20) dazu ausgelegt ist, dass eine durch Muskelkraft erbringbare Maximalleistung des Fahrers eingegeben wird, und dass das Navigationssystem (21) dazu ausgelegt ist, in Abhängigkeit von dem gewünschten Zielort und der eingegebenen Maximalleistung eine Fahrtroute zu ermitteln.

2. Fahrzeug nach Anspruch 1, wobei das Fahrzeug (1) zusätzlich einen Generator (4) aufweist, der mit Muskelkraft antreibbar ist und den Elektromotor (2) mit zusätzlicher Energie versorgen und/oder den Energiespeicher (3) aufladen kann.

3. Fahrzeug nach Anspruch 1, wobei das Navigationssystem (21) dem Steuergerät (6) zusätzliche Daten bezüglich der zu befahrenden Strecke übermittelt, insbesondere Daten bezüglich eines Höhenprofils der zu befahrenden Strecke und/oder zu erwartender Fahrgeschwindigkeiten.

4. Verfahren zum Betrieb eines Fahrzeuges (1) mit kombiniertem Elektro- und Muskelkraftantrieb mit einem Elektromotor (2) zum Antrieb des Fahrzeuges (1) und einem Energiespeicher (3) zur Versorgung des Elektromotors (2) mit elektrischer Energie, wobei
mindestens eine, die geplante Fahrstrecke repräsentierende Größe über eine Eingabeeinheit (20) eingegeben wird,
eine Leistungsanforderung, welche die zum Befahren der geplanten Fahrstrecke von einem Fahrer des Fahrzeuges (1) durch Muskelkraft zu erbringende Sollleistung darstellt, in Abhängigkeit von einem Ladezustand des Energiespeichers (3) und von einem zum Befahren der geplanten Fahrstrecke ermittelten Gesamtenergiebedarf durch ein Steuergerät (6) ermittelt wird und
die ermittelte Leistungsanforderung über eine Ausgabeeinheit (22) an den Fahrer ausgegeben wird,
wobei die Länge der geplanten Fahrstrecke oder der gewünschte Zielort als die die geplante Fahrstrecke repräsentierende Größe eingegeben wird, und wobei die Länge der geplanten Fahrstrecke mit Hilfe von Navigationsdaten aus dem eingegebenen gewünschten Zielort ermittelt wird,
**dadurch gekennzeichnet, dass**
über die Eingabeeinheit (20) eine durch Muskelkraft erbringbare Maximalleistung des Fahrers eingegeben wird und mit Hilfe eines Navigationssystems (21) in Abhängigkeit von dem gewünschten Zielort und der eingegebenen Maximalleistung eine Fahrtroute ermittelt wird.

5. Verfahren nach Anspruch 4, wobei permanent oder regelmäßig auf Basis des gewünschten Zielortes und/oder der Länge der geplanten Fahrstrecke sowie einer aktuellen Position und/oder einer bereits absolvierten Teilstrecke eine Reststrecke berechnet wird und für die Reststrecke eine aktualisierte Leistungsanforderung ermittelt wird.

6. Verfahren nach einem der Ansprüche 4 und 5, wobei die Leistungsanforderung und/oder aktualisierte Leistungsanforderung zusätzlich in Abhängigkeit von gespeicherten durchschnittlichen Energieverbrauchsdaten ermittelt werden.

7. Verfahren nach einem der Ansprüche 4 bis 6, wobei die Leistungsanforderung und/oder aktualisierte Leistungsanforderung zusätzlich in Abhängigkeit von einem Höhenprofil der geplanten Fahrstrecke und/oder zu erwartenden Fahrgeschwindigkeiten ermittelt wird.

8. Verfahren nach einem der Ansprüche 4 bis 7, wobei mit Hilfe der Muskelkraft ein Generator (4) angetrieben wird, durch welchen der Elektromotor (2) mit Energie versorgt und/oder der Energiespeicher (3) geladen werden kann, wobei Leistungsparameter des Generators (4) in Abhängigkeit von der ermittelten Leistungsanforderung oder aktualisierten Leistungsanforderung eingestellt werden.

9. Verfahren nach Anspruch 8, wobei über die Eingabeeinheit (20) eine Wunschleistung des Fahrers eingegeben wird und die Leistungsparameter des Generators (4) entsprechend der Wunschleistung eingestellt werden, zumindest solange die Wunschleistung größer oder gleich der ermittelten Leistungsanforderung oder aktualisierten Leistungsanforderung ist.

10. Verfahren nach einem der Ansprüche 4 bis 9, wobei über die Ausgabeeinheit (22) Fahrerinformationen, insbesondere ein Hinweis, dass eine höhere Leistung zu erbringen ist und/oder dass die Fahrgeschwindigkeit reduziert werden sollte, ausgegeben werden, wenn die aktuell durch den Fahrer erbrachte Istleistung kleiner als die Leistungsanforderung oder die aktualisierte Leistungsanforderung ist.

## Claims

1. Vehicle (1) having combined electric and muscle power drive, having:
an electric motor (2) for driving the vehicle (1);
an energy accumulator (3) for supplying the electric motor (2) with electrical energy; and
a power management system which has:
an input unit (20) for inputting at least one variable which represents the planned route,
a control unit (6) for determining a power requirement which represents the setpoint power which is to be provided to drive along the planned route by a driver of the vehicle (1) by means of muscle power, as a function of a state of charge of the energy accumulator (3) and of a total energy demand which is determined to drive along the planned route,
an output unit (22) for outputting the determined power requirement to the driver, and a navigation system (21) which is coupled to the input unit (20) and the control unit (6) and determines at least the length of the planned route on the basis of a desired destination which is input into the input unit (20),
**characterized in that**
the input unit (20) is configured in such a way that a maximum power of the driver which can be provided by means of muscle power is input, and **in that** the navigation system (21) is configured to determine a route as a function of the desired destination and the maximum power which is input.

2. Vehicle according to Claim 1, wherein the vehicle (1) additionally has a generator (4) which can be driven with muscle power and can supply the electric motor (2) with additional energy and/or can charge the energy accumulator (3).

3. Vehicle according to Claim 1, wherein the navigation system (21) transmits additional data with respect to the route to be driven along to the control unit (6), in particular data relating to an altitude profile of the route to be driven along and/or expected velocities.

4. Method for operating a vehicle (1) with combined electric and muscle power drive having an electric motor (2) for driving the vehicle (1) and an energy accumulator (3) for supplying the electric motor (2) with electrical energy, wherein
at least one variable which represents the planned route is input by means of an input unit (20),
a power requirement which represents the setpoint power to be provided to drive along the planned route by a driver of the vehicle (1) by means of muscle power is determined as a function of a state of charge of the energy accumulator (3) and of a total energy demand, determined to drive along the planned route, by a control unit (6), and
the determined power requirement is output to the driver by means of an output unit (22),
wherein the length of the planned route or the desired destination is input as the variable which represents the planned route, and
wherein the length of the planned route is determined using navigation data from the desired destination which is input,
**characterized in that**
a maximum power of the driver which can be provided by muscle power is input by means of the input unit (20) and a route is determined using a navigation system (21) as a function of the desired destination and the maximum power which is input.

5. Method according to Claim 4, wherein a residual route is calculated continuously or regularly on the basis of the desired destination and/or the length of the planned route and a current position and/or a partial route which has already been travelled along, and an updated power requirement is determined for the residual route.

6. Method according to one of Claims 4 and 5, wherein the power requirement and/or updated power requirement are determined additionally as a function of stored average energy consumption data.

7. Method according to one of Claims 4 to 6, wherein the power requirement and/or updated power requirement are determined additionally as a function of an altitude profile of the planned route and/or expected velocities.

8. Method according to one of Claims 4 to 7, wherein a generator (4), by which the electric motor (2) can be supplied with energy and/or the energy accumulator (3) can be charged, is driven using the muscle power, wherein power parameters of the generator (4) are set as function of the determined power requirement or updated power requirement.

9. Method according to Claim 8, wherein a desired power of the driver is input by means of the input unit (20), and the power parameters of the generator (4) are set in accordance with the desired power at least as long as the desired power is greater than or equal to the determined power requirement or updated power requirement.

10. Method according to one of Claims 4 to 9, wherein driver information, in particular a message that a larger amount of power is to be provided and/or that the velocity should be reduced is output by means of the output unit (22) if the actual power which is provided by the driver at a particular time is lower than the power requirement or the updated power requirement.

## Revendications

1. Véhicule (1), avec propulsion par la force musculaire et électrique combinée, avec :
un moteur électrique (2) servant à la propulsion du véhicule (1) ;
un accumulateur d'énergie (3) servant à l'alimentation du moteur électrique (2) en énergie électrique ; et
un système de gestion d'énergie comportant :
une unité d'entrée (20) servant à l'entrée d'au moins une grandeur représentant le tronçon de conduite planifié ;
un appareil de commande (6) servant au calcul d'une demande de puissance représentant la puissance théorique à fournir par force musculaire pour permettre à un conducteur du véhicule (1) de parcourir le tronçon de conduite planifié, en fonction d'un état de charge de l'accumulateur d'énergie (3) et d'un besoin d'énergie total calculé pour parcourir le tronçon de conduite planifié ;
une unité d'envoi (22) servant à envoyer la demande de puissance calculée au conducteur ; et
comportant un système de navigation (21) couplé à l'unité d'entrée (20) et à l'appareil de commande (6) et calculant au moins la longueur du tronçon de conduite planifié sur la base d'un lieu cible souhaité entré dans l'unité d'entrée (20) ;
**caractérisé en ce que** :
l'unité d'entrée (20) est conçue pour entrer une puissance maximale du conducteur à amener par force musculaire et que le système de navigation (21) est conçu pour calculer un itinéraire de conduite en fonction du lieu cible souhaité et de la puissance maximale entrée.

2. Véhicule selon la revendication 1, le véhicule (1) comportant en outre un générateur (4) propulsé par force musculaire et pouvant alimenter le moteur électrique (2) en énergie supplémentaire et/ou pouvant charger l'accumulateur d'énergie (3).

3. Véhicule selon la revendication 1, le système de navigation (21) transmettant à l'appareil de commande (6) des données supplémentaires par rapport au tronçon à parcourir, notamment des données par rapport à un profil de hauteur du tronçon à parcourir et/ou aux vitesses de conduite attendues.

4. Procédé d'actionnement d'un véhicule (1) avec propulsion par la force musculaire et électrique combinée avec un moteur électrique (2) servant à la propulsion du véhicule (1) et avec un accumulateur d'énergie (3) servant à l'alimentation du moteur électrique (2) en énergie électrique ;
au moins une grandeur représentant le tronçon de conduite planifié étant entré via une unité d'entrée (20) ;
une demande de puissance représentant la puissance théorique devant être amenée par un conducteur du véhicule (1) par force musculaire pour parcourir le tronçon de conduite planifié, en fonction d'un état de charge de l'accumulateur d'énergie (3) et d'un besoin d'énergie total calculé pour parcourir le tronçon de conduite planifié et calculé par un appareil de commande (6) ; et
la demande de puissance calculée étant envoyée au conducteur via une unité d'envoi (22) ;
la longueur du tronçon de conduite planifié ou du lieu cible souhaité étant entrée sous la forme de la grandeur représentant le tronçon de conduite planifié et la longueur du tronçon de conduite planifié étant calculée à l'aide de données de navigation à partir du lieu cible souhaité entré ;
**caractérisé en ce que** :
une puissance maximale du conducteur pouvant être amenée par force musculaire est entrée via l'unité d'entrée (20) et un itinéraire de conduite est calculé à l'aide d'un système de navigation (21) en fonction du lieu cible souhaité et de la puissance maximale entrée.

5. Procédé selon la revendication 4, un tronçon restant étant calculé régulièrement ou en permanence sur la base du lieu cible souhaité et/ou de la longueur du tronçon de conduite planifié ainsi que d'une position actuelle et/ou d'un tronçon partiel déjà parcouru et une demande de puissance actualisée étant calculée pour le tronçon restant.

6. Procédé selon l'une quelconque des revendications 4 et 5, la demande de puissance et/ou la demande de puissance actualisée étant en outre calculées en fonction des données de consommation d'énergie moyennes mémorisées.

7. Procédé selon l'une quelconque des revendications 4 à 6, la demande de puissance et/ou la demande de puissance actualisée étant en outre calculée en fonction d'un profil de hauteur du tronçon de conduite planifié et/ou des vitesses de conduite attendues.

8. Procédé selon l'une quelconque des revendications 4 à 7, un générateur (4) par le biais duquel le moteur électrique (2) peut être alimenté en énergie et/ou permettant de charger l'accumulateur (3) étant entraîné à l'aide de la force musculaire, les paramètres de puissance du générateur (4) étant réglés en fonction de la demande de puissance calculée ou de la demande de puissance actualisée.

9. Procédé selon la revendication 8, une puissance souhaitée du conducteur étant entrée par le biais de l'unité d'entrée (20) et les paramètres de puissance du générateur (4) étant réglés en fonction de la puissance souhaitée, au moins tant que la puissance souhaitée est supérieure ou égale à la demande de puissance calculée ou à la demande de puissance actualisée.

10. Procédé selon l'une quelconque des revendications 4 à 9, les informations de conducteur, notamment un message de renseignement indiquant qu'une puissance plus élevée doit être amenée et/ou que la vitesse de conduite devrait être réduite sont envoyés via l'unité d'envoi (22) lorsque la puissance réelle actuellement amenée par le conducteur est inférieure à la demande de puissance ou à la demande de puissance actualisée.
